# EUROPEAN PATENT APPLICATION

(11) **EP 4 825 805 A1**
(43) Date of publication of application: **21.10.2026**
(21) Application number: 26172875.2
(22) Date of filing: 16.04.2026
(51) Int. Cl.: C01D 15/00, C01D 13/00, H01M 10/0562

(54) **METHOD FOR CONTINUOUSLY PRODUCING AN ELECTROLYTE SOLUTION CONTAINING AN ALKALI METAL HEXAFLUOROPHOSPHATE**

(30) Priority: 17.04.2025 KR 20250050160
(71) Applicant: Foosung Co., Ltd., Hwaseong-si, Gyeonggi-do 18576 (KR)
(72) Inventor: PARK, Soon Hong, 46278 Busan (KR); KIM, Dong Hyun, 44521 Ulsan (KR); CHO, Young Gu, 44932 Ulsan (KR); LEE, Hong Seok, 44751 Ulsan (KR); KIM, Young Ho, 47744 Busan (KR)
(74) Representative: Marks & Clerk LLP

(57) **Abstract**

Provided is a method for continuous manufacturing of an electrolyte containing an alkali metal hexafluorophosphate. The method comprises a mother liquor preparation step of preparing a mother liquor in a slurry form containing an organic solvent, an alkali metal hexafluorophosphate dissolved therein, and unreacted alkali metal fluoride particles within a reactor; a filtering step of introducing a portion of the mother liquor into a first cross-flow filter to obtain a filtrate and a retentate, the filtrate being obtained by filtering the unreacted alkali metal fluoride particles from the mother liquor and including the organic solvent and the alkali metal hexafluorophosphate; a refluxing step of refluxing the retentate obtained in the filtering step into the reactor and a transporting step of transporting the filtrate obtained in the filtering step to a subsequent process; and a reaction proceeding step including backwashing a second cross-flow filter with a makeup organic solvent in a molar flow rate equal to a molar flow rate of the organic solvent contained in the filtrate of the transporting step to obtain a backwash effluent; and supplying the backwash effluent into the reactor.

## Description

### CLAIM FOR PRIORITY

This application claims priority to Korean Patent Application No. 10-2025-0050160 filed on April 17, 2025 with the Ministry of Intellectual Property (MOIP), the entire contents of which are hereby incorporated by reference.

### BACKGROUND

### 1. Technical Field

Example embodiments of the present invention relates to an electrolyte solution containing an alkali metal hexafluorophosphate, and more particularly, to an electrolyte solution containing an alkali metal hexafluorophosphate that can be used for an electrolyte of a secondary battery or the like.

### 2. Related Art

Recently, secondary batteries have become key components in various applications ranging from portable electronic products such as mobile phones and laptop computers, and cordless electronic devices such as vacuum cleaners, to electric vehicles, and the demand therefor is expected to continue to increase.

As an example of the secondary battery, a lithium secondary battery operates on the principle that lithium ions included in a cathode active material move to an anode through an electrolyte and are intercalated into the layered structure of an anode active material (charging), and then the lithium ions intercalated into the layered structure of the anode active material return to the cathode through the electrolyte (discharging). The electrolyte is a lithium salt dissolved in an organic solvent, and lithium hexafluorophosphate, which has high stability and excellent electrical properties, is mainly used as the lithium salt.

Although lithium hexafluorophosphate is manufactured using various methods, there is a need for a manufacturing method capable of reducing costs.

### SUMMARY

Lithium hexafluorophosphate is mainly produced using a batch process; however, the batch process is inefficient for mass production as it requires reaction and filtration times for each batch. Furthermore, there is a possibility that product uniformity may decrease because reaction conditions can slightly vary from batch to batch. Additionally, high-concentration slurry generated during the manufacturing process frequently causes filter clogging, which can lead to maintenance costs and time losses.

Accordingly, example embodiments of the present invention provide a method for producing an electrolyte solution containing an alkali metal hexafluorophosphate having excellent properties at a low cost.

The technical objects of the present invention are not limited to those mentioned above, and other technical objects not mentioned will be clearly understood by those skilled in the art from the following description.

In some example embodiments, a method for continuous manufacturing of an electrolyte containing an alkali metal hexafluorophosphate is provided. The method comprises a mother liquor preparation step of preparing a mother liquor in a slurry form containing an organic solvent, an alkali metal hexafluorophosphate dissolved therein, and unreacted alkali metal fluoride particles within a reactor; a filtering step of introducing a portion of the mother liquor into a first cross-flow filter to obtain a filtrate and a retentate, the filtrate being obtained by filtering the unreacted alkali metal fluoride particles from the mother liquor and including the organic solvent and the alkali metal hexafluorophosphate; a refluxing step of refluxing the retentate obtained in the filtering step into the reactor and a transporting step of transporting the filtrate obtained in the filtering step to a subsequent process; and a reaction proceeding step including backwashing a second cross-flow filter with a makeup organic solvent in a molar flow rate equal to a molar flow rate of the organic solvent contained in the filtrate of the transporting step to obtain a backwash effluent; and supplying the backwash effluent into the reactor.

The second cross-flow filter may include unreacted alkali metal fluoride particles located on a filter surface thereof. The backwash effluent may be an alkali metal fluoride dispersion in which the unreacted alkali metal fluoride particles located on the filter surface of the second cross-flow filter are dispersed in the makeup organic solvent.

The reaction proceeding step may further include supplying a makeup alkali metal fluoride and a makeup phosphorus pentafluoride into the reactor in a molar flow rate equal to a molar flow rate of the alkali metal hexafluorophosphate contained in the filtrate of the transporting step to additionally generate the mother liquor.

The mother liquor containing the alkali metal hexafluorophosphate may be obtained by reacting an initial alkali metal fluoride and an initial phosphorus pentafluoride within an initial organic solvent after supplying the initial organic solvent, the initial alkali metal fluoride, and the initial phosphorus pentafluoride into the reactor. The initial phosphorus pentafluoride may be supplied in its chemical equivalent, and the initial alkali metal fluoride may be supplied in an excess amount relative to its chemical equivalent. A molar ratio of the initial alkali metal fluoride to the initial phosphorus pentafluoride may be 1.05 to 1.3.

The mother liquor containing the alkali metal hexafluorophosphate may be obtained by reacting an initial alkali metal fluoride and an initial phosphorus pentafluoride within an initial organic solvent after supplying the initial organic solvent, the initial alkali metal fluoride, and the initial phosphorus pentafluoride into the reactor. The initial organic solvent may be a backwash effluent obtained by backwashing the second cross-flow filter.

When a flow rate of the filtrate of the transporting step is greater than or equal to a reference value, the reaction proceeding step, the filtering step, the refluxing step, and the transporting step may be continuously performed.

The filtering step, the refluxing step, the transporting step, and the reaction proceeding step are a first filtering step, a first refluxing step, a first transporting step, and a first reaction proceeding step, respectively. In this case, when a flow rate of the filtrate of the first transporting step is less than a reference value, the method may further comprises: a second filtering step of introducing a portion of the mother liquor into the second cross-flow filter to filter the unreacted alkali metal fluoride from the mother liquor to obtain a filtrate and a retentate, the filtrate obtained from the second cross-flow filter containing the organic solvent and the alkali metal hexafluorophosphate; a second refluxing step of refluxing the retentate obtained in the second filtering step into the reactor, and a second transporting step of transporting the filtrate obtained in the second filtering step to a subsequent process; and a second reaction proceeding step comprising backwashing the first cross-flow filter with a makeup organic solvent in a molar flow rate equal to a molar flow rate of the organic solvent contained in the filtrate of the second transporting step to obtain a backwash effluent, and supplying the backwash effluent obtained by backwashing the first cross-flow filter into the reactor.

In the first filtering step, the unreacted alkali metal fluoride particles may be accumulated on a filter surface of the first cross-flow filter, and the backwash effluent obtained by backwashing the first cross-flow filter is an alkali metal fluoride dispersion in which the unreacted alkali metal fluoride particles accumulated on the filter surface of the first cross-flow filter are dispersed in the makeup organic solvent.

The second reaction proceeding step may further include supplying a makeup alkali metal fluoride and a makeup phosphorus pentafluoride into the reactor in a molar flow rate equal to a molar flow rate of the alkali metal hexafluorophosphate contained in the filtrate of the second transporting step to additionally generate the mother liquor.

When a flow rate of the filtrate of the second transporting step is greater than or equal to a reference value, the second reaction proceeding step, the second filtering step, the second refluxing step, and the second transporting step may be continuously performed.

When the flow rate of the filtrate of the second transporting step is less than the reference value, the first filtering step, the first refluxing step, the first transporting step, and the first reaction proceeding step may be performed. In the first reaction proceeding step, the backwash effluent obtained by backwashing the second cross-flow filter may be an alkali metal fluoride dispersion in which the unreacted alkali metal fluoride accumulated within the second cross-flow filter in the second filtering step is dispersed in the makeup organic solvent.

When the flow rate of the filtrate of the first transporting step is greater than or equal to the reference value, the first reaction proceeding step, the first filtering step, the first refluxing step, and the first transporting step may be continuously performed. When the flow rate of the filtrate of the first transporting step is less than the reference value, the second filtering step, the second refluxing step, the second transporting step, and the second reaction proceeding step may be performed.

The organic solvent may be a linear or cyclic carbonate ester, a lactone, a linear or cyclic ether, or a mixture thereof. The organic solvent may be ethyl methyl carbonate (EMC).

The alkali metal fluoride may be LiF, and the alkali metal hexafluorophosphate may be LiPF₆.

### BRIEF DESCRIPTION OF DRAWINGS

Example embodiments of the present invention will become more apparent by describing in detail example embodiments of the present invention with reference to the accompanying drawings, in which:
FIG. 1 is a schematic diagram showing a manufacturing system for producing a concentrated electrolyte solution containing an alkali metal hexafluorophosphate (MPF₆) according to an embodiment of the present invention, and also shows that a first cross-flow filter in the manufacturing system performs filtering of a mother liquor while a makeup organic solvent is supplied into the reactor through backwashing of a second cross-flow filter;
FIG. 2 is an enlarged schematic diagram showing cross-flow filters in the manufacturing system of FIG. 1;
FIG. 3 is a flowchart illustrating the production of a concentrated electrolyte solution containing an alkali metal hexafluorophosphate MPF₆ according to an embodiment of the present invention;
FIG. 4 is a schematic diagram showing that a makeup organic solvent is supplied into the reactor through backwashing of the first cross-flow filter while the second cross-flow filter performs filtering of the mother liquor; and
FIG. 5 is an enlarged schematic diagram of the cross-flow filters in the manufacturing system of FIG. 4.

### DESCRIPTION OF EXAMPLE EMBODIMENTS

Hereinafter, preferred embodiments according to the present invention will be described in more detail with reference to the accompanying drawings in order to explain the present invention more specifically. However, the present invention is not limited to the embodiments described herein and may be embodied in other forms. In the drawings, when a layer is referred to as being "on" another layer or substrate, it may be formed directly on the other layer or substrate, or a third layer may be interposed therebetween. In the present embodiments, "first," "second," or "third" is not intended to impose any limitation on the components, but should be understood as terms for distinguishing the components.

### Method for Producing Alkali Metal Hexafluorophosphate

An alkali metal hexafluorophosphate may be produced through the following reaction scheme:

[Reaction Scheme] MF + PF₅ → MPF₆

In the above reaction scheme, M is an alkali metal and may be Li, Na, or K. MF is an alkali metal fluoride and, for example, may be lithium fluoride (LiF), sodium fluoride (NaF), or potassium fluoride (KF). MPF₆ is an alkali metal hexafluorophosphate and may be LiPF₆, NaPF₆, or KPF₆.

The reaction of the above reaction scheme may proceed in an organic solvent in which the alkali metal fluoride (MF) is not dissolved while the alkali metal hexafluorophosphate (MPF₆) is dissolved. Specifically, the organic solvent may be a chain or cyclic carbonate ester, a lactone, a chain or cyclic ether, or a mixture thereof.

The chain carbonate ester may be dimethyl carbonate (DMC), diethyl carbonate (DEC), or ethyl methyl carbonate (EMC), and the cyclic carbonate ester may be ethylene carbonate, propylene carbonate, or butylene carbonate. The lactone may be gamma-butyrolactone or gamma-valerolactone. The ether may be a chain ether such as dimethoxyethane or diethyl ether, or a cyclic ether such as tetrahydrofuran, methyltetrahydrofuran, or dioxane.

In one example, the organic solvent may be a chain or cyclic carbonate ester, specifically a chain carbonate ester, and more specifically, ethyl methyl carbonate (EMC).

For the reaction of the above reaction scheme, phosphorus pentafluoride (PF₅) may be introduced into the organic solvent in a gaseous state, and the alkali metal fluoride (MF) may be introduced into the organic solvent in a solid state, i.e., in a particulate state, or in a slurry state dispersed in the organic solvent. The alkali metal hexafluorophosphate (MPF₆) obtained by the reaction of the phosphorus pentafluoride (PF₅) and the alkali metal fluoride (MF) in the organic solvent may be in a state of being dissolved in the organic solvent. In other words, an organic solvent solution of alkali metal hexafluorophosphate (MPF₆) can be obtained by the reaction scheme.

Phosphorus pentafluoride (PF₅) may be introduced according to the stoichiometric equivalent shown in the reaction scheme, and the alkali metal fluoride (MF) may be introduced in an excess amount relative to the stoichiometric equivalent. Specifically, the molar ratio of MF/PF₅ may be 1.05 to 1.3, and more specifically, 1.15 to 1.25. In this case, the introduced PF₅ reacts quickly and completely with the MF to produce MPF₆ without acidic impurities caused by side reactions with the organic solvent. However, since the MF is introduced in excess, it may remain as solid particles in the organic solvent solution of MPF₆ produced by the reaction. Accordingly, the organic solvent solution of MPF₆ (hereinafter referred to as a "mother liquor") may have a slurry form containing unreacted MF.

The reaction may be performed in a moisture-free atmosphere at a pressure lower than atmospheric pressure and at a temperature of about 5 to 15 °C, specifically 7 to 12 °C.

### System for Producing Alkali Metal Hexafluorophosphate

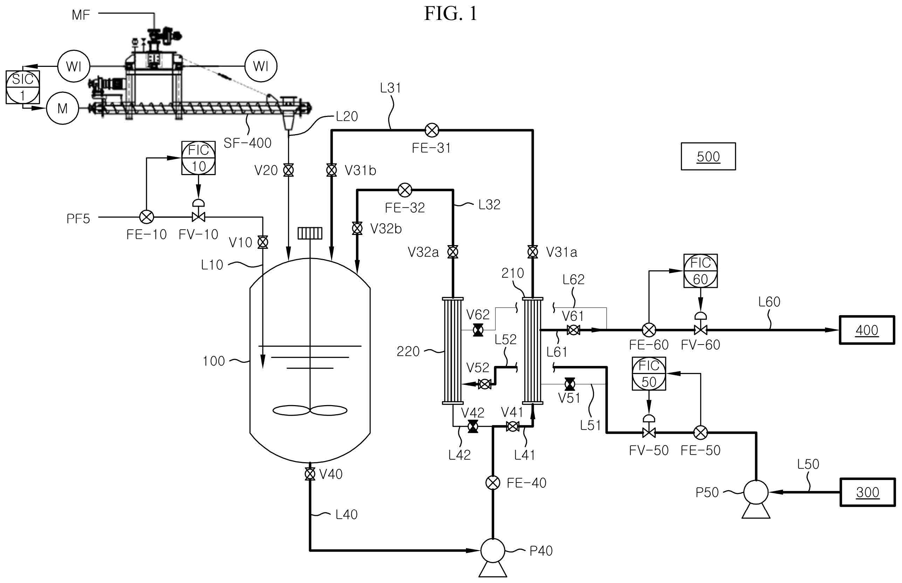

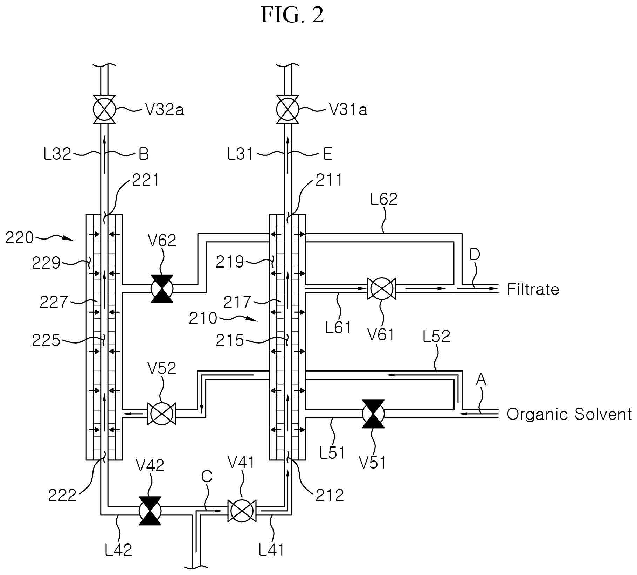

FIG. 1 is a schematic diagram showing a manufacturing system for producing a concentrated electrolyte solution containing an alkali metal hexafluorophosphate (MPF₆) according to an embodiment of the present invention. FIG. 2 is an enlarged schematic diagram showing cross-flow filters in the manufacturing system of FIG. 1.

Referring to FIGS. 1 and 2, the manufacturing system may include a reactor 100 in which the reaction of the above reaction scheme occurs. The reactor 100 may include an agitator, and an alkali metal fluoride supply line L20, through which a solid-state alkali metal fluoride (MF) is supplied, may be connected to the reactor 100.

A screw feeder SF-400, an electronic scale WI, a screw feeder motor inverter SIC-1, and an alkali metal fluoride on-off valve V20 may be installed in the alkali metal fluoride supply line L20. The screw feeder SF-400 may be used to introduce the alkali metal fluoride into the reactor 100 through the alkali metal fluoride supply line L20 and can control the supply amount of the alkali metal fluoride by receiving a signal from the electronic scale WI and adjusting the RPM of the screw feeder motor inverter SIC-1.

A phosphorus pentafluoride supply line L10, through which a gas containing phosphorus pentafluoride PF₅ is supplied, may be connected to the reactor 100. A phosphorus pentafluoride flow meter FE-10, a phosphorus pentafluoride flow control valve FV-10, and a phosphorus pentafluoride on-off valve V10 may be installed in the phosphorus pentafluoride supply line L10. The phosphorus pentafluoride flow meter FE-10 may measure the flow rate of phosphorus pentafluoride and may transmit it to a phosphorus pentafluoride flow controller FIC-10, and the phosphorus pentafluoride flow controller FIC-10 may control the phosphorus pentafluoride flow control valve FV-10 to regulate the supply amount of the gas containing phosphorus pentafluoride supplied into the reactor 100 through the phosphorus pentafluoride supply line L10.

In addition to the phosphorus pentafluoride gas, the gas containing phosphorus pentafluoride may further contain hydrochloric acid gas. The hydrochloric acid gas may also be contained in a filtrate obtained in first and second filtering steps to be described later and transported to a subsequent process, which may be a process for removing acids including hydrochloric acid. Hereinafter, the gas containing phosphorus pentafluoride may be referred to as phosphorus pentafluoride.

A first organic solvent supply or reflux line L31 and a second organic solvent supply or reflux line L32, through which an organic solvent or a retentate containing an organic solvent discharged from cross-flow filters to be described later is supplied, may be connected to the reactor 100. Additionally, a mother liquor discharge line L40, through which a mother liquor in a slurry form containing unreacted alkali metal fluoride MF particles is discharged, may be connected to the reactor 100, wherein the mother liquor is an organic solvent solution in which an alkali metal hexafluorophosphate, which is a reaction product, is dissolved.

The viscosity of the mother liquor produced in the reactor 100 may be 0.8 to 60 mPa·s, for example, 5 to 40 mPa·s. In this case, an appropriate production amount of the alkali metal hexafluorophosphate can be obtained while appropriately maintaining the replacement cycle of a filter. To this end, the concentration of the alkali metal hexafluorophosphate in the mother liquor may be adjusted.

Specifically, the mother liquor may contain 8 to 12 moles of the alkali metal hexafluorophosphate per 50 moles of the organic solvent, and the molar ratio of the unreacted alkali metal fluoride MF to the alkali metal hexafluorophosphate MPF₆ may be 0.05 to 0.3, and more specifically, 0.15 to 1.25.

The manufacturing system may also include at least two, for example, a first cross-flow filter 210 and a second cross-flow filter 220. Each of the cross-flow filters 210 and 220 may include a feed solution compartment 215 or 225 therein, a filtrate compartment 219 or 229 surrounding the outside of the feed solution compartment 215 or 225, and a filter 217 or 227 which is a porous membrane positioned therebetween.

Each feed solution compartment 215 or 225 may be a space where the mother liquor flows between a mother liquor inlet 212 or 222, which is connected to the mother liquor discharge line L40 of the reactor 100 and into which the mother liquor in a slurry form is introduced, and a discharge port 211 or 221, through which the treated mother liquor, i.e., a retentate, is discharged.

The filter 217 or 227 filters out unreacted alkali metal fluoride MF particles larger than a pore size of the filter from the mother liquor, and the filtrate compartment 219 or 229 may be a space into which a filtrate, i.e., an organic solvent solution of alkali metal hexafluorophosphate from which the unreacted alkali metal fluoride MF particles have been removed by the filter 217 or 227, is introduced.

The retentate is the remaining solution excluding the filtrate and the unreacted alkali metal fluoride MF particles accumulated on the surface of the filter 217 or 227 from the mother liquor flowing into the mother liquor inlet 212 or 222. However, since neither the unreacted alkali metal fluoride MF particles nor the organic solvent solution of alkali metal hexafluorophosphate is completely removed from the retentate and they remain therein, the retentate can maintain a slurry state in which the alkali metal fluoride MF particles are dispersed in the organic solvent solution of alkali metal hexafluorophosphate.

In each of the cross-flow filters 210 and 220, the flow of the mother liquor, which is the feed solution between the inlet 212 or 222 and the discharge port 211 or 221, and the flow of the filtrate passing through the filter 217 or 227 are not parallel but may cross each other. Compared to a conventional filter in which the flow of a feed solution and the flow of a filtrate are in the same direction, that is, the flow of the feed solution is perpendicular to the filter surface, these cross-flow filters 210 and 220 take a relatively longer time for the pores of the filter to be clogged by solid particles, thereby leading to a reduction in manufacturing costs.

The diameter φ of the feed solution compartment 215 or 225 of each cross-flow filter 210 or 220 may be 2 mm to 5 mm, for example, 3 mm to 4 mm, in order to prevent clogging of the feed solution compartment 215 or 225 and to obtain a desired filtrate flow rate.

The filter 217 or 227 of each cross-flow filter 210 or 220 may be a porous polyalkylene layer, for example, a porous polyethylene layer. In addition, the filter 217 or 227 may consist of a single layer of porous polyethylene. In this case, compared to a ceramic filter that reacts with HF to produce water, the filter 217 or 227 has no reactivity with HF, thereby improving the filter life and the purity of the organic solvent solution of alkali metal hexafluorophosphate. Additionally, the pore size of the filter 217 or 227 may be 0.1 µm to 10 µm. Meanwhile, the average particle size of the alkali metal fluoride supplied through the alkali metal fluoride supply line L20 may be 50 to 100 µm, for example, 60 to 80 µm; however, as described above, since an excess amount of the alkali metal fluoride reacts with phosphorus pentafluoride gas in the reactor 100 while circulating through the manufacturing system, the particle size may decrease. Accordingly, for proper filtering of the alkali metal fluoride particles, the pore size of the filter 217 or 227 may satisfy the range of 0.1 µm to 10 µm, and within this pore size range, the life of the cross-flow filter can be appropriately secured.

A mother liquor discharge valve V40 for allowing or blocking the discharge of the mother liquor and a mother liquor pump P40 may be installed in the mother liquor discharge line L40 connected downstream of the reactor 100. A mother liquor flow meter FE-40 may be further installed in the mother liquor discharge line L40. The mother liquor discharge line L40 is branched into first and second mother liquor supply lines L41 and L42 downstream of the mother liquor pump P40, and the mother liquor supply lines L41 and L42 may be connected to the mother liquor inlets 212 and 222 of the cross-flow filters 210 and 220, respectively. First and second mother liquor inlet valves V41 and V42 may be respectively installed in the first and second mother liquor supply lines L41 and L42 to allow or block the flow of the mother liquor according to a command from a controller 500.

The discharge ports 211 and 221 of the cross-flow filters 210 and 220 may be connected to first and second organic solvent supply or reflux lines L31 and L32, respectively. First and second organic solvent discharge valves V31a and V32a may be respectively installed in the organic solvent supply or reflux lines L31 and L32 to allow or block the flow of a retentate flowing through one of the organic solvent supply or reflux lines L31 and L32 and the flow of an organic solvent flowing through the other according to a command from the controller 500. In addition, organic solvent flow meters FE-31 and FE-32 and organic solvent valves V31b and V32b may be installed in the first and second organic solvent supply or reflux lines L31 and L32.

Fresh solvent supply lines L50, L51, and L52, through which a fresh organic solvent is supplied from a solvent reservoir 300, may be connected to the filtrate compartments 219 and 229 of the respective cross-flow filters 210 and 220. A fresh solvent pump P50, a fresh solvent flow meter FE-50, and a fresh solvent flow control valve FV-50 may be installed in an integrated fresh solvent supply line L50 connected to the solvent reservoir 300. The fresh solvent flow meter FE-50 may measure the flow rate of the supplied fresh solvent and may transmit it to a fresh solvent flow controller FIC-50, and the fresh solvent flow controller FIC-50 may control the fresh solvent flow control valve FV-50 to regulate the supply amount of the fresh solvent supplied through the fresh solvent supply line L50. The integrated fresh solvent supply line L50 may be branched into first and second fresh solvent supply lines L51 and L52 downstream of the fresh solvent pump P50, the fresh solvent flow meter FE-50, and the fresh solvent flow control valve FV-50, and the first and second fresh solvent supply lines L51 and L52 may be connected to the filtrate compartments 219 and 229 of the cross-flow filters 210 and 220, respectively. First and second fresh solvent supply valves V51 and V52 may be respectively installed in the first and second fresh solvent supply lines L51 and L52 to allow or block the flow of the fresh solvent according to a command from the controller 500.

In one embodiment of the present invention, the fresh solvent or fresh organic solvent refers to a solvent that does not contain a solute, specifically, the gas containing phosphorus pentafluoride PF₅, the alkali metal fluoride MF, or the alkali metal hexafluorophosphate MPF₆, and may be one type among the organic solvents described above or a mixed solvent in which two or more organic solvents are mixed.

Filtrate discharge lines L60, L61, and L62 for discharging the filtrate may be connected to the filtrate compartments 219 and 229 of the cross-flow filters 210 and 220. Specifically, first and second filtrate discharge lines L61 and L62 may be respectively connected to the filtrate compartments 219 and 229 of the cross-flow filters 210 and 220, and first and second filtrate discharge valves V61 and V62 may be respectively installed in the first and second filtrate discharge lines L61 and L62 to allow or block the flow of the filtrate according to a command from the controller 500. The first and second filtrate discharge lines L61 and L62 may be integrated downstream of the first and second filtrate discharge valves V61 and V62 to form an integrated filtrate discharge line L60, which may be connected to an apparatus 400 for performing a subsequent process. The apparatus 400 may be an apparatus for removing acids including hydrochloric acid. A discharged filtrate flow meter FE-60 and a filtrate flow control valve FV-60 may be installed in the integrated filtrate discharge line L60. The filtrate flow meter FE-60 may measure the flow rate of the discharged filtrate and transmits it to a filtrate flow controller FIC-60, and the filtrate flow controller FIC-60 may control the filtrate flow control valve FV-60 to regulate the discharge amount of the filtrate discharged through the integrated filtrate discharge line L60.

All devices within the manufacturing system may be controlled through the controller 500. Specifically, the controller 500 may open or close valves, operate pumps, operate flow controllers, adjust an electronic scale, adjust flow control valves, operate an agitator in the reactor, and control the temperature in the reactor and the temperature of the cross-flow filters.

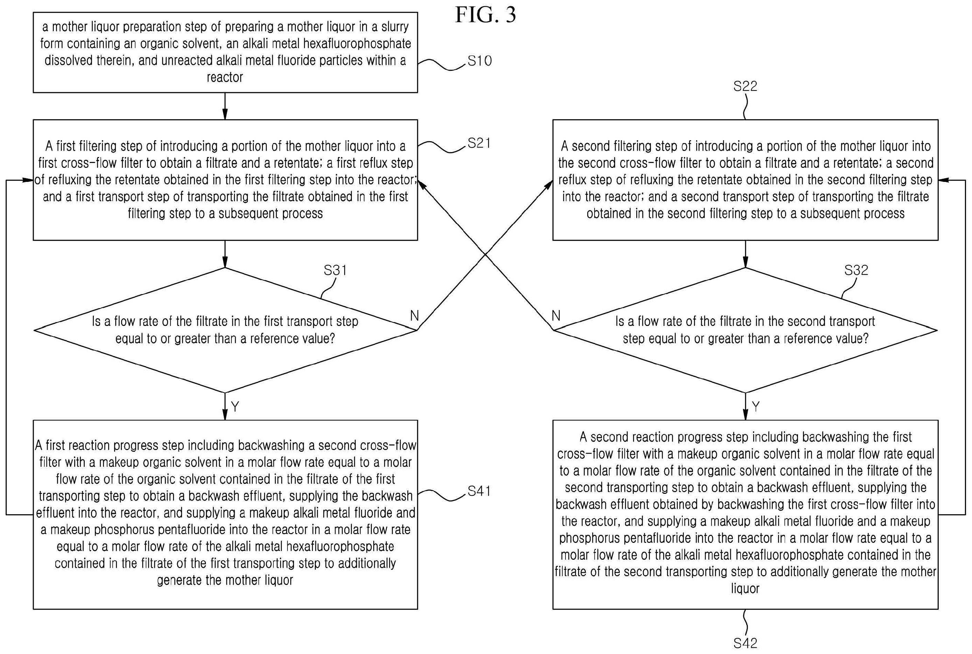

FIG. 3 is a flowchart illustrating the production of a concentrated electrolyte solution containing an alkali metal hexafluorophosphate MPF₆ according to an embodiment of the present invention.

FIG. 1 also shows that a first cross-flow filter in the manufacturing system performs filtering of a mother liquor while makeup organic solvent is supplied into the reactor through backwashing of a second cross-flow filter, and FIG. 2 shows an enlarged view of the cross-flow filters in the manufacturing system of FIG. 1.

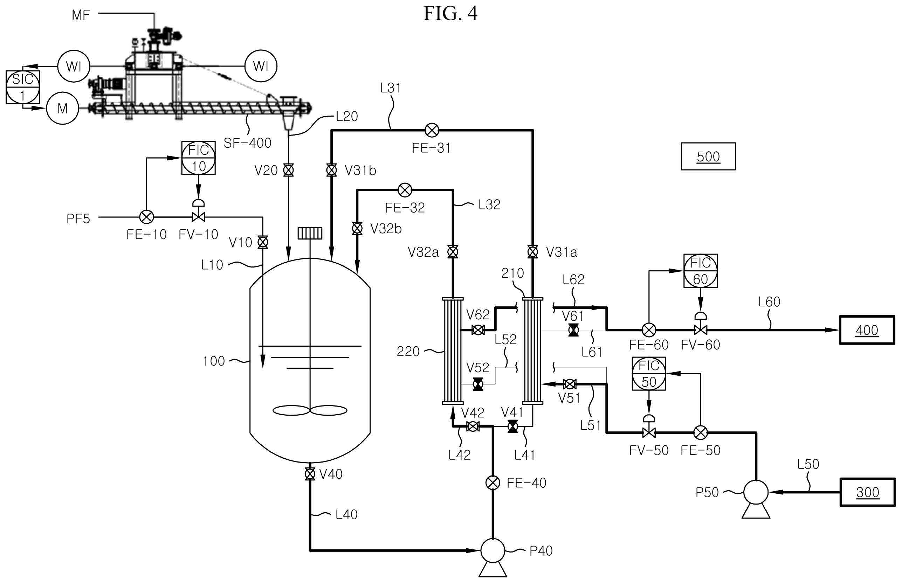

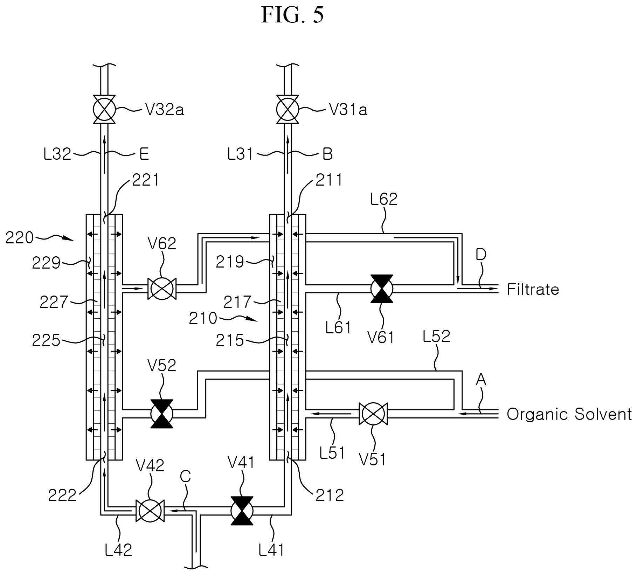

FIG. 4 is a schematic diagram showing that makeup organic solvent is supplied into the reactor through backwashing of the first cross-flow filter while the second cross-flow filter performs filtering of the mother liquor, and FIG. 5 is an enlarged schematic diagram of the cross-flow filters in the manufacturing system of FIG. 4.

Referring to FIGS. 1, 2, 4, and 5, during the production of the concentrated electrolyte solution containing an alkali metal hexafluorophosphate MPF₆ according to an embodiment of the present invention, a controller 500 may control a phosphorus pentafluoride on-off valve V10, an alkali metal fluoride on-off valve V20, a mother liquor discharge valve V40, first and second organic solvent discharge valves V31a and V32a installed in first and second organic solvent supply or reflux lines L31 and L32, and organic solvent valves V31b and V32b installed in first and second organic solvent supply or reflux lines L31 and L32 to be in an open state.

Referring to FIGS. 3, 1, and 2, a mother liquor preparation step S10 may be performed to prepare a mother liquor, which is an organic solvent solution of alkali metal hexafluorophosphate in a slurry form containing unreacted alkali metal fluoride particles in the reactor 100. Thereafter, a first filtering step may be performed to introduce a portion of the mother liquor in the reactor 100 into a first cross-flow filter 210, thereby obtaining a filtrate D from which the alkali metal fluoride particles are filtered and a retentate E remaining after the mother liquor is filtered. Additionally, a first reflux step of refluxing the retentate E obtained in the first filtering step into the reactor 100, and a first transport step of transporting the filtrate D obtained in the first filtering step to a subsequent process may be performed (S21). In the present embodiment, the filtrate may refer to an organic solvent solution of alkali metal hexafluorophosphate from which unreacted alkali metal fluoride particles has been filtered.

In the mother liquor preparation step S 10, the mother liquor, i.e., an initial mother liquor, may contain alkali metal hexafluorophosphate obtained by reacting an initial alkali metal fluoride and an initial phosphorus pentafluoride in an initial organic solvent after the initial organic solvent, the initial alkali metal fluoride, and the initial phosphorus pentafluoride are supplied into the reactor 100.

The initial organic solvent may be an organic solvent obtained by backwashing the second cross-flow filter 220, that is, a backwash effluent B. In the present embodiment, backwashing may refer to causing the organic solvent to flow from filtrate compartments 219 or 229 of the respective cross-flow filters 210 and 220 through filters 217 or 227 to feed solution compartments 215 or 225. Specifically, in a state where a second mother liquor inlet valve V42, a second filtrate discharge valve V62, and a first fresh solvent supply valve V51 are closed through a controller 500, a second fresh solvent supply valve V52 may be opened and a fresh solvent pump P50 may be operated to supply a fresh organic solvent A from an organic solvent reservoir 300 to a filtrate compartment 229 of the second cross-flow filter 220 through an integrated fresh solvent supply line L50 and a second fresh solvent supply line L52. The organic solvent introduced into the filtrate compartment 229 of the second cross-flow filter 220 may pass through a filter 227 and be sent to a feed solution compartment 225. The organic solvent sent to the feed solution compartment 225 i.e., the backwash effluent B may be discharged through a second discharge port 221 and supplied into a reactor 100 through a second organic solvent supply or reflux line L32.

The initial alkali metal fluoride MF may be introduced in a solid particle form through an alkali metal fluoride supply line L20 into the reactor 100 to which the initial organic solvent has been supplied. After or during the introduction of the initial alkali metal fluoride MF, an agitator in the reactor 100 may be operated, and the temperature of the reactor may be lowered to room temperature or lower, specifically 5 to 15°C, for example, 10°C. Thereafter, the initial phosphorus pentafluoride PF₅ may be slowly introduced in a gaseous state through a phosphorus pentafluoride supply line L10 immersed in the organic solvent within the reactor 100. As a result, as described in the above reaction scheme, phosphorus pentafluoride PF₅ and alkali metal fluoride MF may react in the organic solvent to produce alkali metal hexafluorophosphate.

As described above, the initial phosphorus pentafluoride PF₅ may be introduced in accordance with the chemical equivalence shown in the reaction scheme, and the initial alkali metal fluoride MF may be introduced in an excess amount relative to the chemical equivalence. In this case, the introduced initial phosphorus pentafluoride PF₅ rapidly may react with all of the initial alkali metal fluoride MF, thereby producing alkali metal hexafluorophosphate MPF₆ without acidic impurities caused by side reactions with the organic solvent. However, as the initial alkali metal fluoride MF is introduced in an excess amount, it may remain as solid particles in the initial mother liquor, which is an organic solvent solution of alkali metal hexafluorophosphate produced by the reaction. Accordingly, the initial mother liquor may have a slurry form containing unreacted alkali metal fluoride MF particles.

The introduction amount of phosphorus pentafluoride PF₅ may be regulated by the operation of a phosphorus pentafluoride flow controller FIC-10 and a phosphorus pentafluoride flow control valve FV-10 according to a command from the controller 500. The introduction amount of alkali metal fluoride MF may be regulated by the control of a screw feeder motor inverter SIC-1. The introduction amount of the organic solvent may be regulated by the operation of a fresh solvent flow controller FIC-50 and a fresh solvent flow control valve FV-50 according to a command from the controller 500.

The concentration of alkali metal hexafluorophosphate in the initial mother liquor, specifically the molar ratio of the alkali metal hexafluorophosphate to the organic solvent in the initial mother liquor, may be 8 to 12 moles of alkali metal hexafluorophosphate per 50 moles of the organic solvent, but is not limited thereto. Additionally, the molar ratio of unreacted alkali metal fluoride MF to alkali metal hexafluorophosphate MPF₆ in the initial mother liquor may be 0.05 to 0.3, and more specifically 0.15 to 0.25, but is not limited thereto. In a continuous production method of an electrolyte solution to be described later, the concentration of alkali metal hexafluorophosphate in the mother liquor and the molar ratio of unreacted alkali metal fluoride MF to alkali metal hexafluorophosphate MPF₆ may be maintained substantially the same as the values of the initial mother liquor.

In the first filtering step, the first reflux step, and the first transport step S21, the controller 500 may close a second mother liquor inlet valve V42, a first fresh solvent supply valve V51, and a second filtrate discharge valve V62, and open a first mother liquor inlet valve V41, a second fresh solvent supply valve V52, and a first filtrate discharge valve V61. This state may also be maintained in a first reaction progress step S41 to be described later.

In the first filtering step, the controller 500 may operate a mother liquor pump P40 to introduce a portion C of the mother liquor in the reactor 100 into a feed solution compartment 215 through a mother liquor discharge line L40 installed downstream of the reactor 100, a first mother liquor supply line L41, and a mother liquor inlet 212 of a first cross-flow filter 210. A filtrate D obtained by removing alkali metal fluoride particles from the mother liquor C by the filter 217 may be introduced into a filtrate compartment 219, and a retentate E, excluding the filtrate D and unreacted alkali metal fluoride MF particles remaining on the filter 217 from the mother liquor C, may be discharged through a discharge port 211. In the first filtering step, unreacted alkali metal fluoride MF particles may accumulate on a surface of the filter 217 in contact with a feed solution compartment 215.

In the first reflux step, the retentate E may be refluxed into the reactor 100 through a first organic solvent supply or reflux line L31.

In the first transport step, the filtrate D introduced into the filtrate compartment 219 may be introduced into an apparatus 400 for performing a subsequent process through a first filtrate discharge line L61 and an integrated filtrate discharge line L60.

The controller 500 may perform a first evaluation step S31 of evaluating whether a flow rate of the filtrate D in the first transport step is equal to or greater than a reference value. Specifically, a filtrate flow meter FE-60 installed in the integrated filtrate discharge line L60 may measure the flow rate of the filtrate D transported to a subsequent process and transmit the measured flow rate value to the controller 500. The controller 500 may allow different steps to be performed depending on whether the measured flow rate value is equal to or greater than a predetermined reference value or not. The reference value may be a value corresponding to 90% of the initial flow rate of the filtrate D. In addition, the controller 500 may calculate a molar flow rate of the organic solvent and a molar flow rate of the alkali metal hexafluorophosphate in the filtrate D in the first transport step by using a molar ratio of the alkali metal hexafluorophosphate to organic solvent the in the mother liquor and the measured flow rate of the filtrate D in the first transport step.

When the flow rate of the filtrate D in the first transport step is equal to or greater than the reference value, a first reaction progress step S41 may be performed. The first reaction progress step S41 may comprise backwashing the second cross-flow filter 220 with a fresh organic solvent or a makeup organic solvent A in a molar flow rate equal to a molar flow rate of the organic solvent contained in the filtrate D of the first transporting step to obtain a backwash effluent B and supplying the backwash effluent B into the reactor 100.. The first reaction progress step S41 may further comprise supplying a makeup alkali metal fluoride and a makeup phosphorus pentafluoride into the reactor 100 in a molar flow rate equal to a molar flow rate of the alkali metal hexafluorophosphate contained in the filtrate D of the first transporting step to additionally generate the mother liquor. Accordingly, the amount of the mother liquor in the reactor 100 and the molar ratio of the the alkali metal hexafluorophosphate to organic solvent in the mother liquor can be maintained constant.

Specifically, when the measured flow rate value of the filtrate D obtained in the first filtering step and transported to a subsequent process in the first transport step is equal to or greater than a predetermined reference value, the controller 500 may maintain a state in which a second mother liquor inlet valve V42, a first fresh solvent supply valve V51, and a second filtrate discharge valve V62 are closed, and a first mother liquor inlet valve V41, a second fresh solvent supply valve V52, and a first filtrate discharge valve V61 are opened. In addition, the controller 500 may operate the fresh solvent pump P50, a fresh solvent flow controller FIC-50, and a fresh solvent flow control valve FV-50 so that a fresh organic solvent or a makeup organic solvent A, having a molar flow rate identical to the molar flow rate of the organic solvent contained in the filtrate D, is supplied to a filtrate compartment 229 of the second cross-flow filter 220 through an integrated fresh solvent supply line L50 and a second fresh solvent supply line L52 from an organic solvent reservoir 300. The organic solvent introduced into the filtrate compartment 229 may pass through a filter 227 and be sent to a feed solution compartment 225. The organic solvent sent to the feed compartment 225, that is, the backwash effluent B, may be discharged through the second outlet 221 and then supplied into the reactor 100 through the second organic solvent supply or reflux line L32.

Furthermore, when the measured flow rate value of the filtrate D obtained in the first filtering step and transported to a subsequent process in the first transport step is equal to or greater than the predetermined reference value, the controller 500 may operate a screw feeder motor inverter SIC-1 to supply an makeup alkali metal fluoride into the reactor 100 at a molar flow rate identical to the molar flow rate of the alkali metal hexafluorophosphate contained in the filtrate D, and may operate a phosphorus pentafluoride flow controller FIC-10 and a phosphorus pentafluoride flow control valve FV-10 to supply a makeup phosphorus pentafluoride into the reactor 100 at a molar flow rate identical to the molar flow rate of the alkali metal hexafluorophosphate contained in the filtrate D. As a result, within the reactor 100, the newly supplied equivalent amounts of makeup phosphorus pentafluoride PF₅ and makeup alkali metal fluoride MF react in the organic solvent to further produce a mother liquor. Meanwhile, since the alkali metal fluoride MF initially supplied in an excess amount still exists within the production system, the further produced mother liquor may maintain a slurry state.

In the first evaluation step S31, if the flow rate of the filtrate in the first transport step is equal to or greater than the reference value, the first reaction progress step S41, the first filtering step S21, the first reflux step S21, and the first transport step S21 may be continuously performed. Additionally, the first filtering step S21, the first reflux step S21, the first transport step S21, the first evaluation step S31, and the first reaction progress step S41 may proceed simultaneously.

Meanwhile, if the flow rate of the filtrate D obtained in the first filtering process S21 and transported to a subsequent process in the first transport step S21 is less than a reference value, it may mean that a large amount of unreacted alkali metal fluoride MF particles have accumulated on a surface of the filter 217 of the first cross-flow filter 210 in contact with a feed solution compartment 215. Accordingly, the controller 500 may stop sending the mother liquor to the first cross-flow filter 210 and instead send the mother liquor to the second cross-flow filter 220. Simultaneously, the supply of the fresh organic solvent to the second cross-flow filter 220 may be stopped, and the fresh organic solvent may be sent to the first cross-flow filter 210.

Specifically, referring to FIGS. 3, 4, and 5, when the flow rate of the filtrate D obtained in the first filtering process S21 and transported to a subsequent process is less than the reference value, a second filtering step S22 may be performed by introducing a portion of the mother liquor in the reactor 100 into the second cross-flow filter 220 to obtain a filtrate D from which the unreacted alkali metal fluoride particles are filtered and a retentate E remaining after the mother liquor is filtered. Additionally, a second reflux step S22 of refluxing the retentate E obtained in the second filtering step into the reactor 100 and a second transport step S22 of transporting the filtrate D obtained in the second filtering step to a subsequent process may be performed.

Specifically, a first mother liquor inlet valve V41, a second fresh solvent supply valve V52, and a first filtrate discharge valve V61 may be closed through a controller 500, and a second mother liquor inlet valve V42, a second filtrate discharge valve V62, and a first fresh solvent supply valve V51 may be opened through a controller 500. This state may also be maintained in a second reaction progress step S42 to be described later.

In the second filtering step, a mother liquor pump P40 is operated to introduce a portion C of the mother liquor in the reactor 100 into a feed solution compartment 225 through a mother liquor discharge line L40 installed downstream of the reactor 100, a second mother liquor supply line L42, and a mother liquor inlet 222 of a second cross-flow filter 220. A filtrate D obtained by removing alkali metal fluoride particles from the mother liquor C by a filter 227 is introduced into a filtrate compartment 229, and a retentate E, excluding the filtrate D and unreacted alkali metal fluoride MF remaining on the filter 227 from the mother liquor C, may be discharged through a discharge port 221. In the second filtering step, unreacted alkali metal fluoride MF particles may accumulate on a surface of the filter 227 in contact with the feed solution compartment 225.

In the second reflux step, the retentate E may be refluxed into the reactor 100 through a second organic solvent supply or reflux line L32.

In the second transport step, the filtrate D introduced into the filtrate compartment 229 may be introduced into an apparatus 400 for performing a subsequent process through a second filtrate discharge line L62 and an integrated filtrate discharge line L60.

The controller 500 may perform a second evaluation step S32 of evaluating whether a flow rate of the filtrate D in the second transport step is equal to or greater than a reference value. Specifically, the filtrate flow meter FE-60 installed in the integrated filtrate discharge line L60 may measure the flow rate of the filtrate D transported to a subsequent process and transmit the measured flow rate value to the controller 500. The controller 500 may allow different steps to be performed depending on whether the measured flow rate value is equal to or greater than a predetermined reference value or not. Here, the reference value may be a value corresponding to 90% of the initial flow rate of the filtrate D. In addition, the controller 500 may calculate a molar flow rate of the organic solvent and a molar flow rate of the alkali metal hexafluorophosphate in the filtrate D in the second transport step by using a molar ratio of the alkali metal hexafluorophosphate to the organic solvent in the mother liquor and the measured flow rate of the filtrate D in the second transport step.

When the flow rate of the filtrate D in the second transport step is equal to or greater than the reference value, a second reaction progress step S42 may be performed. The second reaction progress step S42 may comprise backwashing the first cross-flow filter 210 with a fresh organic solvent or a makeup organic solvent A in a molar flow rate equal to a molar flow rate of the organic solvent contained in the filtrate D of the second transporting step to obtain a backwash effluent B and supplying the backwash effluent B into the reactor 100. The second reaction progress step S42 may further comprise supplying a makeup alkali metal fluoride and a makeup phosphorus pentafluoride into the reactor 100 in a molar flow rate equal to a molar flow rate of the alkali metal hexafluorophosphate contained in the filtrate D of the second transporting step to additionally generate the mother liquor. Accordingly, the amount of the mother liquor in the reactor 100 and the molar ratio of the organic solvent to the alkali metal hexafluorophosphate in the mother liquor can be maintained constant.

Specifically, when the measured flow rate of the filtrate D obtained in the second filtering step and transported to a subsequent process in the second transport step is equal to or greater than a predetermined reference value, the controller 500 may maintain a state in which a first mother liquor inlet valve V41, a first filtrate discharge valve V61, and a second fresh solvent supply valve V52 are closed, and a first fresh solvent supply valve V51, a second mother liquor inlet valve V42, and a second filtrate discharge valve V62 are opened. Additionally, the controller 500 may operate the fresh solvent pump P50, a fresh solvent flow controller FIC-50, and a fresh solvent flow control valve FV-50 so that a fresh organic solvent or a makeup organic solvent A, having a molar flow rate identical to the molar flow rate of the organic solvent contained in the filtrate D, is supplied to a filtrate compartment 219 of the first cross-flow filter 210 through an integrated fresh solvent supply line L50 and a first fresh solvent supply line L51 from the organic solvent reservoir 300. The organic solvent introduced into the filtrate compartment 219 may pass through a filter 217 and be sent to a feed solution compartment 215. In this process, unreacted alkali metal fluoride MF particles, which had accumulated on a surface of the filter 217 of the first cross-flow filter 210 in contact with the feed solution compartment 215 during the first filtering step S21, are washed and dispersed in the organic solvent sent to the feed solution compartment 215, that is, a backwash effluent B and the backwash effluent B in which the unreacted alkali metal fluoride MF particles are dispersed may be discharged through a discharge port 211 and supplied into the reactor 100 through a first organic solvent supply or reflux line L31. As such, by supplying the backwash effluent B containing the organic solvent A and unreacted alkali metal fluoride particles obtained by backwashing the first cross-flow filter 210 with the organic solvent A into the reactor 100, washing of the unreacted alkali metal fluoride (MF) particles accumulated on a surface of the filter 217 in the first filtering step S21 may also be performed. Therefore, it is not necessary to perform a separate particle washing process or use a separate washing liquid therefor, so that maintenance time can be significantly reduced.

Furthermore, when the measured flow rate of the filtrate D obtained in the second filtering step and transported to a subsequent process in the second transport step is equal to or greater than a predetermined reference value, the controller 500 may operate a screw feeder motor inverter SIC-1 to supply an makeup alkali metal fluoride into the reactor 100 at a molar flow rate identical to the molar flow rate of the alkali metal hexafluorophosphate contained in the filtrate D, and may operate a phosphorus pentafluoride flow controller FIC-10 and a phosphorus pentafluoride flow control valve FV-10 to supply a makeup phosphorus pentafluoride into the reactor 100 at a molar flow rate identical to the molar flow rate of the alkali metal hexafluorophosphate contained in the filtrate D. As a result, within the reactor 100, the newly supplied equivalent amounts of phosphorus pentafluoride PF5 and alkali metal fluoride MF react in the organic solvent to further produce a mother liquor. Meanwhile, since the alkali metal fluoride MF initially supplied in an excess amount still exists within the production system, the further produced mother liquor may maintain a slurry state.

In the second evaluation step S32, if the flow rate of the filtrate in the second transport step is equal to or greater than the reference value, the second reaction progress step S42, the second filtering step S22, the second reflux step S22, and the second transport step S22 may be continuously performed. Additionally, the second filtering step S22, the second reflux step S22, the second transport step S22, the second evaluation step S32, and the second reaction progress step S42 may proceed simultaneously.

Meanwhile, if the measured flow rate of the filtrate D obtained in the second filtering step S22 and transported to a subsequent process in the second transport step S22 is less than a reference value, it may mean that a large amount of unreacted alkali metal fluoride MF particles have accumulated on a surface of the filter 227 of the second cross-flow filter 220 in contact with a feed solution compartment 225. Accordingly, the controller 500 may stop sending the mother liquor to the second cross-flow filter 220 and instead send the mother liquor to the first cross-flow filter 210. Simultaneously, the supply of the fresh organic solvent to the first cross-flow filter 210 may be stopped, and the fresh organic solvent may be sent to the second cross-flow filter 220.

As a result, the first filtering step S21, the first reflux step S21, the first transport step S21, the first evaluation step S31, and the first reaction progress step S41, which have been described with reference to FIGS. 1, 2, and 3, may proceed.

Additionally, referring to FIGS. 1 and 2, in the first reaction proceeding step S41, a fresh organic solvent or a makeup organic solvent A in a molar flow rate equal to a molar flow rate of the organic solvent contained in the filtrate D may be supplied from an organic solvent reservoir 300 to a filtrate compartment 229 of the second cross-flow filter 220 through an integrated fresh solvent supply line L50 and a second fresh solvent supply line L52, and the organic solvent supplied to the filtrate compartment 229 may be sent to a feed compartment 225 through a filter 227. In this process, unreacted alkali metal fluoride (MF) particles accumulated on a surface of the filter 227 of the second cross-flow filter 220 in contact with the feed compartment 225 in the second filtering step S22 may be washed by the fresh organic solvent A and dispersed in the organic solvent sent to the feed compartment 225, that is, a backwash effluent B. The backwash effluent B in which the unreacted alkali metal fluoride (MF) particles are dispersed may be discharged through an outlet 221 and supplied into the reactor 100 through a second organic solvent supply or reflux line L32.

As described above, by supplying the backwash effluent B obtained by backwashing the second cross-flow filter 220 with the organic solvent A into the reactor 100, washing of the unreacted alkali metal fluoride (MF) particles accumulated on the surface of the filter 227 in the second filtering step S22 may also be performed. Therefore, it is not necessary to perform a separate particle washing process or use a separate washing liquid therefor, so that maintenance time can be significantly reduced.

When the molar flow rate of the alkali metal hexafluorophosphate in the filtrate D obtained in the first filtering step S21 or the second filtering step S22 and transported to a subsequent process is X mol/hr, the molar flow rate of the organic solvent may be about 3X to 6X mol/hr. Accordingly, the molar flow rate of the fresh or makeup organic solvent supplied to the first cross-flow filter 210 or the second cross-flow filter 220 in the first reaction progress step S41 or the second reaction progress step S42 may be about 3X to 6X mol/hr, and both the molar flow rate of the makeup alkali metal fluoride and the molar flow rate of the makeup phosphorus pentafluoride supplied into the reactor 100 in the first reaction progress step S41 or the second reaction progress step S42 may be X mol/hr.

The linear velocity of the liquid passing through the cross-flow filter may be 1 to 10 m/sec, and in one example, it may be 1 to 5 m/sec. Within this range, clogging of the cross-flow filter due to the viscosity of the alkali metal hexafluorophosphate organic solvent solution can be alleviated, the lifespan of the filter can be extended by reducing the wear rate of the filter, and a rise in reaction temperature can be suppressed by reducing frictional heat.

As described above, according to the present invention, an electrolyte containing an alkali metal hexafluorophosphate can be continuously prepared by using at least two cross-flow filters, thereby significantly reducing the production cost of the electrolyte containing the alkali metal hexafluorophosphate. However, the effects of the present invention are not limited to the effects mentioned above, and other effects not mentioned will be clearly understood by those skilled in the art from the following description.

While the present invention has been described in detail with reference to preferred embodiments, the present invention is not limited to the above embodiments, and various modifications and changes can be made by those skilled in the art within the technical spirit and scope of the present invention.

## Claims

1. A method for continuous manufacturing of an electrolyte containing an alkali metal hexafluorophosphate, comprising:
a mother liquor preparation step of preparing a mother liquor in a slurry form containing an organic solvent, an alkali metal hexafluorophosphate dissolved therein, and unreacted alkali metal fluoride particles within a reactor;
a filtering step of introducing a portion of the mother liquor into a first cross-flow filter to obtain a filtrate and a retentate, the filtrate being obtained by filtering the unreacted alkali metal fluoride particles from the mother liquor and including the organic solvent and the alkali metal hexafluorophosphate;
a refluxing step of refluxing the retentate obtained in the filtering step into the reactor and a transporting step of transporting the filtrate obtained in the filtering step to a subsequent process; and
a reaction proceeding step including backwashing a second cross-flow filter with a makeup organic solvent in a molar flow rate equal to a molar flow rate of the organic solvent contained in the filtrate of the transporting step to obtain a backwash effluent; and supplying the backwash effluent into the reactor.

2. The method of Claim 1, wherein the second cross-flow filter includes unreacted alkali metal fluoride particles located on a filter surface thereof, and
the backwash effluent is an alkali metal fluoride dispersion in which the unreacted alkali metal fluoride particles located on the filter surface of the second cross-flow filter are dispersed in the makeup organic solvent.

3. The method of Claim 1, wherein the reaction proceeding step further includes supplying a makeup alkali metal fluoride and a makeup phosphorus pentafluoride into the reactor in a molar flow rate equal to a molar flow rate of the alkali metal hexafluorophosphate contained in the filtrate of the transporting step to additionally generate the mother liquor.

4. The method of Claim 1, wherein the mother liquor contains the alkali metal hexafluorophosphate obtained by reacting an initial alkali metal fluoride and an initial phosphorus pentafluoride within an initial organic solvent after supplying the initial organic solvent, the initial alkali metal fluoride, and the initial phosphorus pentafluoride into the reactor,
wherein the initial phosphorus pentafluoride is supplied in its chemical equivalent, and the initial alkali metal fluoride is supplied in an excess amount relative to its chemical equivalent.

5. The method of Claim 4, wherein a molar ratio of the initial alkali metal fluoride to the initial phosphorus pentafluoride is 1.05 to 1.3.

6. The method of Claim 1, wherein the mother liquor contains the alkali metal hexafluorophosphate obtained by reacting an initial alkali metal fluoride and an initial phosphorus pentafluoride within an initial organic solvent after supplying the initial organic solvent, the initial alkali metal fluoride, and the initial phosphorus pentafluoride into the reactor,
wherein the initial organic solvent is a backwash effluent obtained by backwashing the second cross-flow filter.

7. The method of Claim 1, wherein when a flow rate of the filtrate of the transporting step is greater than or equal to a reference value, the reaction proceeding step, the filtering step, the refluxing step, and the transporting step are continuously performed.

8. The method of Claim 1, wherein the filtering step, the refluxing step, the transporting step, and the reaction proceeding step are a first filtering step, a first refluxing step, a first transporting step, and a first reaction proceeding step, respectively;
and when a flow rate of the filtrate of the first transporting step is less than a reference value, the method further comprises:
a second filtering step of introducing a portion of the mother liquor into the second cross-flow filter to filter the unreacted alkali metal fluoride from the mother liquor to obtain a filtrate and a retentate, the filtrate obtained from the second cross-flow filter containing the organic solvent and the alkali metal hexafluorophosphate;
a second refluxing step of refluxing the retentate obtained in the second filtering step into the reactor, and a second transporting step of transporting the filtrate obtained in the second filtering step to a subsequent process; and
a second reaction proceeding step comprising backwashing the first cross-flow filter with a makeup organic solvent in a molar flow rate equal to a molar flow rate of the organic solvent contained in the filtrate of the second transporting step to obtain a backwash effluent, and supplying the backwash effluent obtained by backwashing the first cross-flow filter into the reactor.

9. The method of Claim 8, wherein in the first filtering step, the unreacted alkali metal fluoride particles are accumulated on a filter surface of the first cross-flow filter, and
the backwash effluent obtained by backwashing the first cross-flow filter is an alkali metal fluoride dispersion in which the unreacted alkali metal fluoride particles accumulated on the filter surface of the first cross-flow filter are dispersed in the makeup organic solvent.

10. The method of Claim 8, wherein the second reaction proceeding step further includes supplying a makeup alkali metal fluoride and a makeup phosphorus pentafluoride into the reactor in a molar flow rate equal to a molar flow rate of the alkali metal hexafluorophosphate contained in the filtrate of the second transporting step to additionally generate the mother liquor.

11. The method of Claim 8, wherein when a flow rate of the filtrate of the second transporting step is greater than or equal to a reference value, the second reaction proceeding step, the second filtering step, the second refluxing step, and the second transporting step are continuously performed.

12. The method of Claim 8, wherein when the flow rate of the filtrate of the second transporting step is less than a reference value, the first filtering step, the first refluxing step, the first transporting step, and the first reaction proceeding step are performed,
wherein in the first reaction proceeding step, the backwash effluent obtained by backwashing the second cross-flow filter is an alkali metal fluoride dispersion in which the unreacted alkali metal fluoride accumulated within the second cross-flow filter in the second filtering step is dispersed in the makeup organic solvent.

13. The method of Claim 12, wherein when the flow rate of the filtrate of the first transporting step is greater than or equal to the reference value, the first reaction proceeding step, the first filtering step, the first refluxing step, and the first transporting step are continuously performed,
and when the flow rate of the filtrate of the first transporting step is less than the reference value, the second filtering step, the second refluxing step, the second transporting step, and the second reaction proceeding step are performed.

14. The method of Claim 1, wherein the organic solvent is a linear or cyclic carbonate ester, a lactone, a linear or cyclic ether, or a mixture thereof.

15. The method of Claim 14, wherein the organic solvent is ethyl methyl carbonate (EMC).

16. The method of Claim 1, wherein the alkali metal fluoride is LiF, and the alkali metal hexafluorophosphate is LiPF₆.
